# FASCICULE DE BREVET EUROPEEN

(11) **EP 2 637 886 B1**
(45) Date de publication et mention de la délivrance du brevet: **11.02.2015**
(21) Numéro de dépôt: 11788543.4
(22) Date de dépôt: 09.11.2011
(51) Int. Cl.: B60K 35/00, B60K 37/06, B60B 11/02, G06F 3/041, G06F 3/048

(54) **FAÇADE DE CONTRÔLE ÉLECTRONIQUE POUR VÉHICULE AUTOMOBILE**
ELEKTRONISCHES BEDIENFELD FÜR EIN KRAFTFAHRZEUG
ELECTRONIC CONTROL PANEL FOR MOTOR VEHICLE

(30) Priorité: 10.11.2010 FR 1004401
(43) Date de publication de la demande: 18.09.2013
(73) Titulaire: Valeo Systemes Thermiques, 78320 Le Mesnil Saint Denis (FR)
(72) Inventeur: HUYNH, Tan Duc, F-93330 Neuilly Sur Marne (FR)
(74) Mandataire: Pothmann, Karsten
(86) Numéro de dépôt international: PCT/FR2011/000595
(87) Numéro de publication internationale: WO 2012/062979

(56) Documents cités:
- DE-A1- 4 121 180
- DE-A1-102004 014 748
- DE-A1-102004 031 659

## Description

La présente invention est relative à une façade de contrôle électronique pour véhicule automobile.

De nos jours, le tableau de bord d'un véhicule automobile comprend en son milieu un écran d'affichage, par exemple du type TFT et vu dans un plan vertical en dessous, se trouve un panel de contrôle de diverses fonctions, comme par exemple des fonctions radio, climatisation etc.

Ces zones sont actuellement séparées et ne sont pas reliées fonctionnellement.

De plus, cette séparation ne permet pas toujours d'obtenir un aspect esthétique intégré. En particulier, on souhaite actuellement obtenir des surfaces de commandes homogènes d'une part et lisses d'autre part, de sorte, lorsque le véhicule est éteint, le tableau de bord et tous les panels de commande se présentent d'une façon similaire. Une telle façade est connue du DE-A-10 2004 014 748, divulguant une surface de commande tactile, dont au moins une part est construite comme un écran tactile.

La présente invention vise à palier aux inconvénients précités en proposant une façade de contrôle électronique qui soit homogène, notamment à l'état éteint et qui puisse assurer un maximum de fonctionnalités de commande dans le véhicule, et qui soit simple et peu coûteuse. A cet effet, l'invention a pour objet une façade de contrôle électronique pour véhicule automobile, caractérisée en ce qu'elle comprend
- un écran tactile,
- une surface de commande tactile, contigüe audit écran tactile, et
- un support commun de l'écran tactile et de la surface de commande tactile,
l'écran tactile et la surface de commande tactile étant disposés sur le support commun au niveau de leur jonction au même niveau de manière à définir un plan quasi-continu de commande.

Ainsi, on peut obtenir une présentation homogène et lisse de la façade de contrôle, en particulier lorsque le véhicule est éteint.

Cette façade de contrôle peut comporter une ou plusieurs des caractéristiques suivantes, prise seule ou en combinaison :
L'écran tactile peut être recouvert d'une pièce de polycarbonate transparent enduit d'un vernis antireflet. On obtient ainsi, lorsque l'écran est éteint, un effet noir brillant très esthétique.

Selon un autre aspect, la surface de la commande tactile comprend une pièce de polycarbonate transparent peinte en noir sur la face opposée à celle destinée à être en vis-à-vis d'un utilisateur et comportant des pictogrammes fonctionnels. On obtient ainsi, lorsque le véhicule est éteint, un effet noir mat qui se conjugue parfaitement avec l'aspect brillant de l'écran à l'état éteint.

On prévoit en outre des pictogrammes réalisés par grattage laser pour la surface de commande tactile, ce qui permet une précision de réalisation importante.

Selon un mode de réalisation, la surface de commande tactile comprend un film capacitif collé sur la face opposée à celle destinée à être en vis-à-vis d'un utilisateur. Il s'agit là d'une solution simple et peu coûteuse.

Un effet synergique intéressant peut être obtenue si l'écran tactile est entouré par la surface de commande tactile. On peut donc combiner les informations et commandes tactiles de l'écran et de la surface tactile.

Selon un autre mode de réalisation, vu dans un plan général vertical, on prévoit que l'écran tactile est disposé au dessus de la surface de commande tactile.

Selon encore un autre développement, la surface de commande tactile est galbée.

Puis, pour certaines commandes, par exemple le réglage de volume pour la radio, la surface de commande tactile comprend en outre au moins un bouton de commande rotatif, traversant ladite surface.

D'autres caractéristiques et avantages de l'invention ressortiront de la description suivante, donnée à titre d'exemple, sans caractère limitatif, en regard des figures annexées sur lesquelles :
- la figure 1 est une vue en coupe de côté d'une façade de contrôle électronique selon l'invention,
- la figure 2 est une vue en coupe de côté de la partie basse de la figure 1, et
- la figure 3 est un schéma montrant une vue en perspective le mode de réalisation des figures 1 et 2,
- la figure 4 est un schéma montrant une vue en perspective d'un mode de réalisation alternatif.

Sur toutes les figures, les mêmes éléments portent les mêmes numéros de référence.

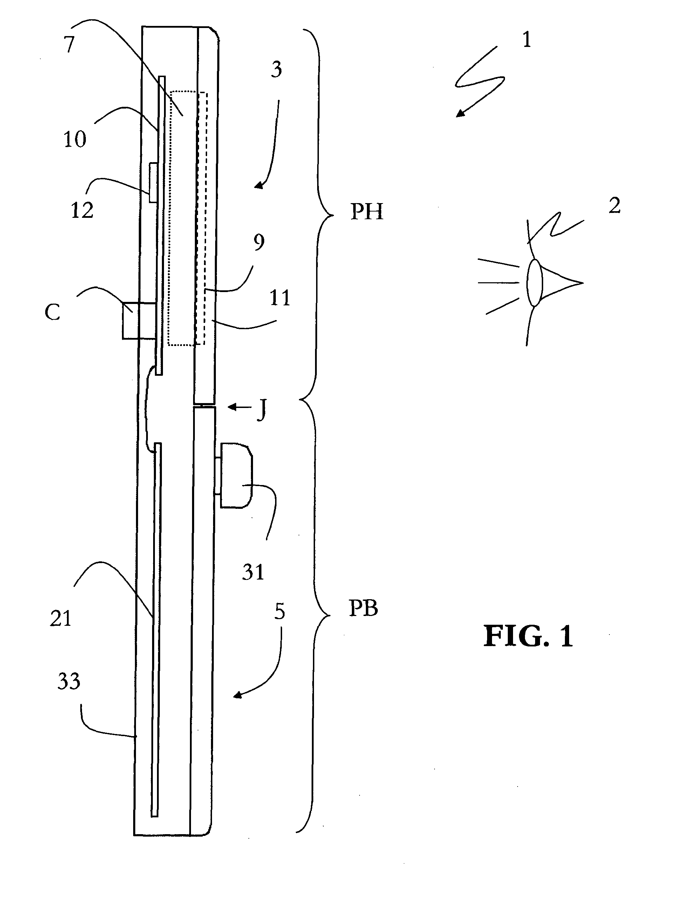

La figure 1 montre une vue en coupe de côté d'une façade 1 de contrôle électronique selon l'invention. On a également représenté l'oeil d'un utilisateur 2.

Cette façade peut être intégrée par exemple dans un tableau de bord d'un véhicule automobile, plus particulièrement dans son centre.

Cette façade de contrôle comporte principalement deux parties, une partie haute PH et une partie basse PB vue dans un plan général vertical. De la sorte, lorsque par exemple le conducteur tourne légèrement la tête depuis son siège, il a le regard en face de la partie haute PH, puis, s'il baisse ensuite légèrement la tête, son regard portera sur la partie basse PB.

La partie haute PH comprend un écran tactile 3 et la partie basse PB une surface de commande tactile 5, contigüe audit écran tactile, au niveau d'une jonction J représentée exagérément sur la figure pour mieux illustrer l'invention.

L'écran tactile 3 peut par exemple être formé par une superposition d'un écran 7 d'affichage de données d'information ou de commandes et d'une dalle tactile capacitive 9 présentant une surface de commande pour la saisie de commandes par un utilisateur.

L'écran 7 comporte par exemple un afficheur TFT (utilisant la technologie de couches minces de transistor ou « Thin film Transistor » en anglais).

La dalle tactile capacitive 9 est transparente pour être placée sur l'écran 7 et servir de moyen de saisie. La dalle tactile capacitive 9 est par exemple réalisée selon la technologie ITO, c'est-à-dire elle est par exemple en verre et comporte par exemple un matériau d'ITO (Oxyde d'indium-étain), tel qu'en couches minces, permettant à la fois une bonne conductivité électrique et une transparence optique.

La dalle tactile capacitive 9 permet de déterminer les coordonnées du point où l'utilisateur appuie avec son doigt sur la surface de commande. Le déplacement ou l'appui du doigt d'un utilisateur provoque la création d'un signal variant avec la localisation et le déplacement de son doigt au contact et selon l'étendue sur cette surface.

Selon le présent exemple, l'écran tactile 3 est recouvert d'une pièce de polycarbonate 11 transparent enduit d'un vernis antireflet. Lorsque l'écran 7 est éteint, on obtient ainsi un effet noir brillant très esthétique.

Au niveau de la face arrière de l'écran 7 est disposé une carte à circuit imprimé 10, portant par exemple un microprocesseur 12 et une connectivité C, par exemple du type CAN avec l'ordinateur de bord du véhicule.

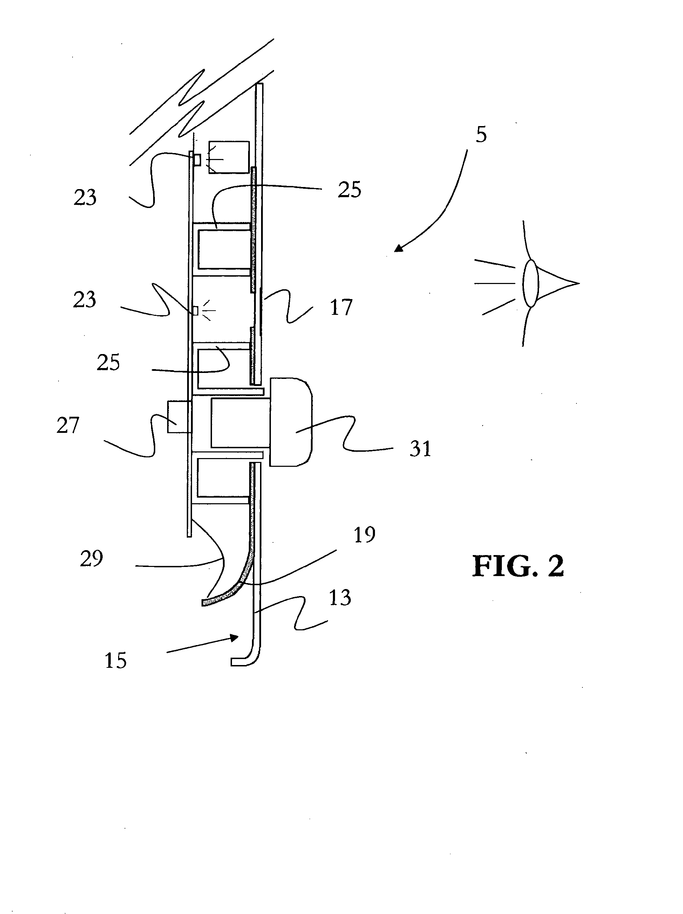

La partie basse PB sera maintenant décrite plus en détail en relation avec les figures 1 et 2.

La surface de la commande tactile 5 comprend par exemple une pièce mince 13 de polycarbonate transparent revêtue d'une peinture noir sur la face 15 opposée à celle destinée à être en vis-à-vis d'un utilisateur 2.

Des pictogrammes fonctionnels 17, par exemple pour indiquer des zones spécifiques de commande, comme des zones de commande de la climatisation ou des fonctions audio peuvent être réalisés par grattage laser sur la pièce 13, ce qui permet une précision de réalisation importante.

Un film capacitif 19 est collé sur la face 15 peinte, opposée à celle destinée à être en vis-à-vis d'un utilisateur 2, par une colle diélectrique permettant de communiquer des charges de la surface de commande vers le film capacitif 19. On connaît un tel film capacitif du document WO02/084876. Ce film eut être aussi bien transparent ou encore opaque.

Il s'agit là d'une solution simple et peu coûteuse.

Sur une carte à circuits imprimés 21 sont disposés des diodes électroluminescentes 23 pour le retro-éclairage des pictogrammes de la pièce de polycarbonate 13.

Des entretoises 25 entre la carte à circuits imprimés 21 et la pièce de polycarbonate 13 permettent non seulement une liaison mécanique efficace, mais aussi de compartimenter des zones de d'éclairage des diodes électroluminescentes 23.

La carte à circuits imprimés 21 porte aussi sur sa face arrière un circuit de contrôle 27 du film capacitif 19 et est relié à ce dernier par une liaison électrique 29.

Puis, pour certaines commandes, par exemple le réglage de volume pour la radio, la surface de commande tactile comprend en outre au moins un bouton de commande rotatif 31, traversant ladite surface de commande 5.

On comprend donc que la façade de contrôle électronique 1 permet d'avoir une grande surface de commande capacitive avec deux technologie capacitives différentes, tout en présentant, au moins à l'état éteint, un aspect homogène et uniforme pour l'utilisateur.

En effet, on obtient ainsi, lorsque le véhicule est éteint, pour la partie basse PB un effet noir mat qui se conjugue parfaitement avec l'aspect brillant de l'écran tactile 3 à l'état éteint.

Aussi bien l'écran tactile 3 que la surface de commande tactile 5 sont fixés sur un support commun 33, réalisé par exemple en matière plastique par moulage par des moyens de fixation appropriées. Ce support peut par exemple présenter des forme de réception de l'écran tactile 3 et de la surface tactile 5 ainsi que des moyens de fixation par vissage, encliquetage et ou collage.

L'écran tactile 3 et de la surface de commande tactile 5 sont disposés sur le support commun 7 au niveau de leur jonction J au même niveau de manière à définir un plan quasi-continu de commande.

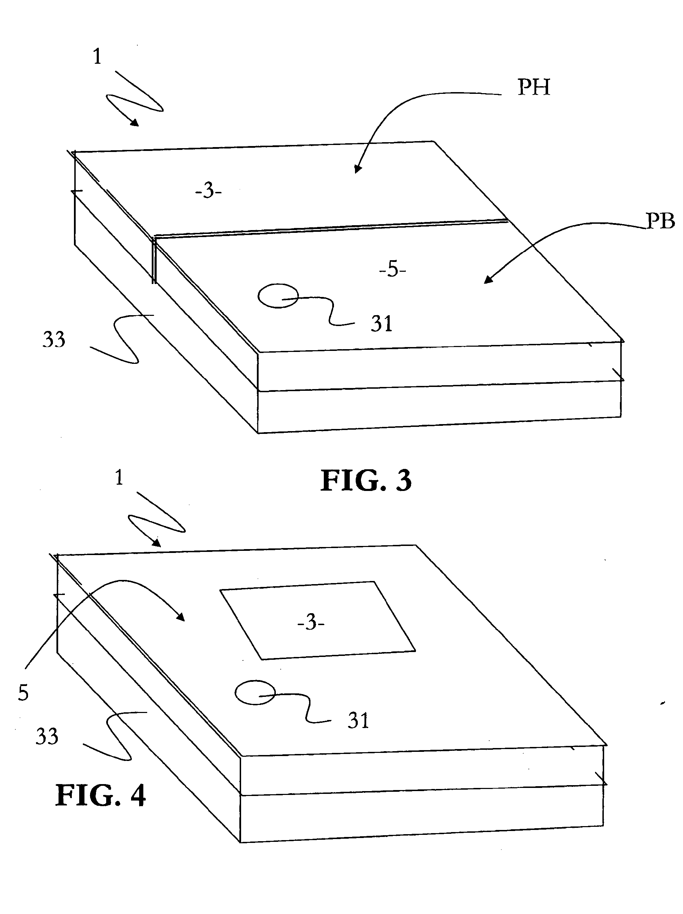

Une vue schématique en perspective est représentée sur la figure 3. On obtient donc une façade de contrôle électronique attractive et facilement adaptable aux besoin des constructeurs des véhicules automobile en fonction des fonctionnalités devant être assurée par cette façade 1.

Selon l'exemple des figures 1 à 3, la surface de commande tactile 5 est plane. Cependant, tout en gardant cette continuité de surface entre l'écran tactile 3 et la surface de commande tactile 5, on peut prévoir dans un autre développement non représenté que la surface de commande tactile soit galbée.

La figure 4 montre un autre mode de réalisation qui diffère de celui des figures 1 à 3 par le fait que l'écran tactile 3 est entouré par la surface de commande tactile 5.

On obtient donc des zones de surfaces de commande tactiles supplémentaires peu coûteuses non seulement en dessous, mais aussi à côté et au dessus de l'écran tactile 3.

Il est donc aussi possible de combiner les informations et commandes tactiles de l'écran tactile 3 et de la surface tactile 5.

## Revendications

1. Façade de contrôle électronique (1) pour véhicule automobile, **caractérisée en ce qu'**elle comprend
- un écran tactile (3),
- une surface de commande tactile (5), contigüe audit écran tactile, et
- un support commun (33) de l'écran tactile (3) et de la surface de commande tactile (5),
l'écran tactile (3) et la surface de commande tactile (5) étant disposés sur le support commun (33) au niveau de leur jonction au même niveau de manière à définir un plan quasi-continu de commande.

2. Façade de contrôle électronique pour véhicule automobile selon la revendication 1, **caractérisée en ce que** l'écran tactile (3) est recouvert d'une pièce (11) de polycarbonate transparent enduit d'un vernis antireflet.

3. Façade de contrôle électronique pour véhicule automobile selon la revendication 1 ou 2, **caractérisée en ce que** la surface de la commande tactile (5) comprend une pièce (13) de polycarbonate transparent peinte en noir sur la face opposée à celle destinée à être en vis-à-vis d'un utilisateur (2) et comportant des pictogrammes fonctionnels (17).

4. Façade de contrôle électronique pour véhicule automobile selon la revendication 3, **caractérisée en ce que** les pictogrammes (17) sont réalisées par grattage laser.

5. Façade de contrôle électronique pour véhicule automobile selon la revendication 3 ou 4, **caractérisée en ce que** la surface de commande tactile (5) comprend un film capacitif (19) collé sur la face opposée à celle destinée à être en vis-à-vis d'un utilisateur (2).

6. Façade de contrôle électronique pour véhicule automobile selon la revendication 3 ou 4, **caractérisée en ce que** l'écran tactile (3) est entouré par la surface de commande tactile (5).

7. Façade de contrôle électronique pour véhicule automobile selon l'une quelconque des revendications 1 à 5, **caractérisée en ce que** vu dans un plan général vertical, l'écran tactile (3) est disposé au dessus de la surface de commande tactile (5).

8. Façade de contrôle électronique pour véhicule automobile selon l'une quelconque des revendications 1 à 7, **caractérisée en ce que** la surface de commande (**5**) tactile est galbée.

9. Façade de contrôle électronique pour véhicule automobile selon l'une quelconque des revendications 1 à 8, **caractérisée en ce que** la surface de commande tactile (5) comprend en outre au moins un bouton de commande rotatif (31), traversant ladite surface (5).

## Patentansprüche

1. Elektronische Steuerfrontplatte (1) für ein Kraftfahrzeug, **dadurch gekennzeichnet, dass** sie enthält
- einen Berührungsbildschirm (3),
- eine an den Berührungsbildschirm angrenzende Berührungsbedienfläche (5), und
- einen gemeinsamen Träger (33) des Berührungsbildschirms (3) und der Berührungsbedienfläche (5),
wobei der Berührungsbildschirm (3) und die Berührungsbedienfläche (5) auf dem gemeinsamen Träger (33) im Bereich ihrer Verbindung auf gleicher Höhe angeordnet sind, um eine praktisch durchgehende Bedienebene zu definieren.

2. Elektronische Steuerfrontplatte für ein Kraftfahrzeug nach Anspruch 1, **dadurch gekennzeichnet, dass** der Berührungsbildschirm (3) von einem mit einem reflexfreien Lack beschichteten Bauteil aus transparentem Polycarbonat (11) bedeckt ist.

3. Elektronische Steuerfrontplatte für ein Kraftfahrzeug nach Anspruch 1 oder 2, **dadurch gekennzeichnet, dass** die Fläche der Berührungsbedienung (5) ein Bauteil (13) aus transparentem Polycarbonat enthält, das auf der Seite schwarz angestrichen ist, die derjenigen entgegengesetzt ist, die dazu bestimmt ist, sich einem Benutzer (2) gegenüber zu befinden und Funktionspiktogramme (17) aufweist.

4. Elektronische Steuerfrontplatte für ein Kraftfahrzeug nach Anspruch 3, **dadurch gekennzeichnet, dass** die Piktogramme (17) durch Laserritzen hergestellt werden.

5. Elektronische Steuerfrontplatte für ein Kraftfahrzeug nach Anspruch 3 oder 4, **dadurch gekennzeichnet, dass** die Berührungsbedienfläche (5) eine kapazitive Folie (19) enthält, die auf die Seite geklebt ist, die derjenigen entgegengesetzt liegt, die dazu bestimmt ist, sich einem Benutzer (2) gegenüber zu befinden.

6. Elektronische Steuerfrontplatte für ein Kraftfahrzeug nach Anspruch 3 oder 4, **dadurch gekennzeichnet, dass** der Berührungsbildschirm (3) von der Berührungsbedienfläche (5) umgeben ist.

7. Elektronische Steuerfrontplatte für ein Kraftfahrzeug nach einem der Ansprüche 1 bis 5, **dadurch gekennzeichnet, dass** der Berührungsbildschirm (3) in einer allgemeinen senkrechten Ebene gesehen oberhalb der Berührungsbedienfläche (5) angeordnet ist.

8. Elektronische Steuerfrontplatte für ein Kraftfahrzeug nach einem der Ansprüche 1 bis 7, **dadurch gekennzeichnet, dass** die Berührungsbedienfläche (5) gewölbt ist.

9. Elektronische Steuerfrontplatte für ein Kraftfahrzeug nach einem der Ansprüche 1 bis 8, **dadurch gekennzeichnet, dass** die Berührungsbedienfläche (5) außerdem mindestens einen Drehbedienknopf (31) enthält, der die Fläche (5) durchquert.

## Claims

1. Electronic control panel (1) for a motor vehicle, **characterized in that** it comprises
- a clutch-sensitive screen (3),
- a touch-sensitive control surface (5), contiguous with said clutch-sensitive screen, and
- a common support (33) for the touch-sensitive screen (3) and for the touch-sensitive control surface (5),
the touch-sensitive screen (3) and the touch-sensitive control surface (5) being placed on the common support (33) where they join at the same level so as to define a virtually continuous control plane.

2. Electronic control panel for a motor vehicle according to Claim 1, **characterized in that** the touch-sensitive screen (3) is covered with a transparent polycarbonate part (11) coated with a nonreflecting varnish.

3. Electronic control panel for a motor vehicle according to Claim 1 or 2, **characterized in that** the touch-sensitive control surface (5) comprises a transparent polycarbonate part (13) painted black on the face opposite to that designed to be facing a user (2) and comprising functional pictograms (17).

4. Electronic control panel for a motor vehicle according to Claim 3, **characterized in that** the pictograms (17) are produced by laser scratching.

5. Electronic control panel for a motor vehicle according to Claim 3 or 4, **characterized in that** the touch-sensitive control surface (5) comprises a capacitive film (19) bonded to the face opposite to that designed to be facing a user (2).

6. Electronic control panel for a motor vehicle according to Claim 3 or 4, **characterized in that** the touch-sensitive screen (3) is surrounded by the touch-sensitive control surface (5).

7. Electronic control panel for a motor vehicle according to any one of Claims 1 to 5, **characterized in that**, seen in a generally vertical plane, the touch-sensitive screen (3) is placed above the touch-sensitive control surface (5).

8. Electronic control panel for a motor vehicle according to any one of Claims 1 to 7, **characterized in that** the touch-sensitive control surface (5) is curved.

9. Electronic control panel for a motor vehicle according to any one of Claims 1 to 8, **characterized in that** the touch-sensitive control surface (5) also comprises at least one rotary control button (31) passing through said surface (5).
